# EUROPEAN PATENT APPLICATION

(11) **EP 3 053 989 A1**
(43) Date of publication of application: **10.08.2016**
(21) Application number: 14850746.0
(22) Date of filing: 29.09.2014
(51) Int. Cl.: C09K 19/10, C09K 19/20, C09K 19/42

(54) **LIQUID CRYSTAL COMPOSITION**

(30) Priority: 01.10.2013 KR 20130117089
(71) Applicant: LG Chem, Ltd., Seoul 150-721 (KR)
(72) Inventor: RYU, Su Young, Daejeon 305-738 (KR); HUH, Doo Young, Daejeon 305-738 (KR); KIM, Seong Jin, Daejeon 305-738 (KR); JOUNG, Chul In, Daejeon 305-738 (KR); LEE, Ji Youn, Daejeon 305-738 (KR)
(74) Representative: Goddar, Heinz J.
(86) International application number: PCT/KR2014/009125
(87) International publication number: WO 2015/050346

(57) **Abstract**

Provided are a liquid crystal composition, a liquid crystal film and a display device. The liquid crystal composition according to the present application may form a liquid crystal layer in which staining due to a thickness difference does not occur even in large-area coating such that a liquid crystal layer can be formed on a base layer having erosivity to a raw material since the liquid crystal composition may have a suitable solubility even in a solvent in which solubility is normally low.

## Description

### [Technical Field]

The present application relates to a liquid crystal composition, a liquid crystal film, and a display device.

### [Background Art]

There is a continuous demand for liquid crystal displays (LCDs), plasma display panels (PDPs) or organic liquid crystal displays (OLEDs) to be manufactured thinner, lighter and wider, and in order to realize a higher quality image, studies on enhancing display uniformity, a contrast ratio and a viewing angle are also progressing.

Optical films including a brightness-enhancing film, a retardation film or a viewing angle compensation film may be used to reduce a change in color of a display device, ensure a viewing angle, and enhance brightness.

As such an optical film, an elongation film that provides optical anisotropy by elongating a polymer film is known, and a method of using optical anisotropy of a liquid crystal film prepared by curing a reactive liquid crystal compound is also known.

In Korean Laid-Open Patent Application No. 2013-0092816, technology using the reactive liquid crystal compound is disclosed.

A liquid crystal film is conventionally manufactured by coating a coating solution in which a reactive mesogen (RM) is dissolved in a solvent. However, solvents in which the RM is sufficiently soluble are very limited, and therefore, it is difficult to maintain the RM in a liquid state for a suitable time when the solvent is dried after coating, and problems occur during the process. In addition, thickness deviation may cause staining, and because a solvent in which the RM is highly soluble should be used, a base may be eroded.

### [Disclosure]

### [Technical Problem]

The present application is directed to providing a liquid crystal composition, a liquid crystal film and a display device. The present application may provide a liquid crystal composition which may have excellent solubility in various solvents, particularly, solvents known to conventionally have a low solubility with respect to RM , and therefore, provide a high quality liquid crystal film by preventing staining due to thickness deviation occurring during manufacture of the film by large-area coating and by preventing erosion of a base.

### [Technical Solution]

In one aspect, the present application provides a liquid crystal composition.

The exemplary liquid crystal composition may include a reactive liquid crystal compound. The term "reactive liquid crystal compound" used herein may refer to a compound including a part exhibiting liquid crystallinity, for example, a backbone of a mesogen, and also include at least one reactive functional group, for example, a liquid crystal compound including a backbone of a mesogen core and a spacer connecting a reactive functional group to the backbone of the mesogen core.

The term "mesogen core" used herein may refer to a monomeric compound, that is, a polymerizable mesogen or liquid crystal compound. The term "spacer" used herein may refer to a flexible organic group, and a compound connecting the reactive functional group to a polymerizable mesogen core. In addition, the term "reactive functional group" may include all types of polymerizable groups.

The liquid crystal composition may include a first reactive liquid crystal compound and a second reactive liquid crystal compound.

The first reactive liquid crystal compound and the second reactive liquid crystal compound may have a structure belonging to the category of Formula 1 below.

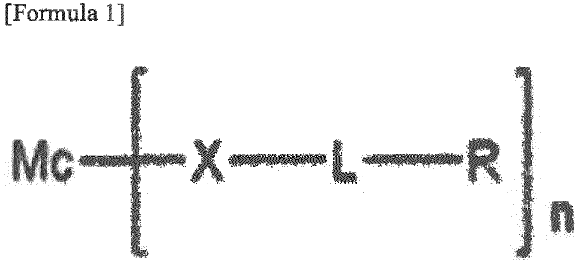

In Formula 1, M_{c} is a mesogen core, X is a single bond, -O-, -C(=O)-,-C(=O)O-, -O(C=O)- or -O(C=O)O-, L is an alkylene group, R is an alkenyl group, an epoxy group, a carboxyl group, a cyano group, an acryloyl group, a methacryloyl group, an acryloyloxy group or a methacryloyloxy group, and n is a number, which is 2 or higher.

In addition, X of the first reactive liquid crystal compound is different from X of the second reactive liquid crystal compound, or the number of carbon atoms in an alkylene group of L of the first reactive liquid crystal compound is different from that of the second reactive liquid crystal compound.

In the specification, as the alkylene group, unless particularly defined otherwise, an alkylene group having 1 to 20, 1 to 16, 1 to 12, 1 to 8 or 1 to 4 carbon atoms may be used. The alkylene group may be a linear, branched or cyclic type. The alkylene group may be optionally substituted by at least one substituent.

In addition, in the specification, as the alkenyl group, unless particularly defined otherwise, an alkenyl group having 2 to 20, 2 to 16, 2 to 12, 2 to 8 or 2 to 4 carbon atoms may be used. The alkenyl group may be a linear, branched or cyclic type. In addition, the alkenyl group may be optionally substituted by at least one substituent.

As the substituent that can be substituted by an optional compound or substituent in the present application, an alkyl group, an alkoxy group, an alkenyl group, an epoxy group, a cyano group, a carboxyl group, an acryloyl group, a methacryloyl group, an acryloyloxy group, a methacryloyloxy group or an aryl group may be used, but the present application is not limited thereto.

The backbones of the mesogen cores included in the first liquid crystal compound and the second reactive liquid crystal compound may be the same as each other. The phrase "backbones of the mesogen core are the same as each other" used herein may mean that rigid parts constituting the mesogen core are the same as each other, that is, for example, an aromatic residue is the same as a linker connecting the aromatic residue, and may also mean that substituents of the aromatic residue are partially different.

The liquid crystal composition of the present application may have the same backbone of a mesogen core and include a first reactive liquid crystal compound and a second reactive liquid crystal compound, thereby having a high solubility in various solvents, and thus may form a liquid crystal layer on which staining due to a thickness difference does not occur even when the liquid crystal layer is formed by large-area coating. In addition, even in a solvent in which the composition has a low solubility, the composition may have a suitable solubility, and thus the liquid crystal layer may be formed on a base layer having erosivity to a raw material.

The mesogen core may include at least two or three benzene ring structures connected with a single bond, -O-, -C(=O)-, -C(=O)O-, -O(C=O)- or -O(C=O)O-. The mesogen core may include at least two to 5, 2 to 4 or 2 to 3 benzene ring structures connected with, preferably, -C(=O)O- or -O(C=O)-.

In the liquid crystal composition of the present application, n of Formula 1 may be a number of 2 to 10, 2 to 8, 2 to 6 or 2 to 5.

In one example, the mesogen core may be represented by Formula 2.

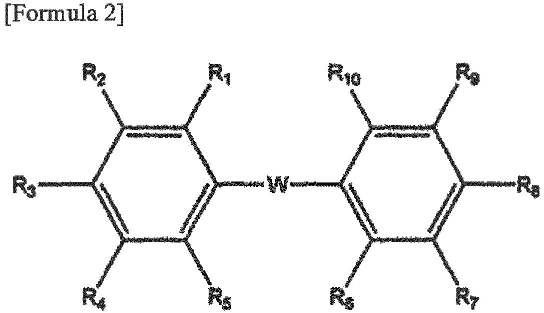

In Formula 2, W is a single bond, -O-, -C(=O)-, -C(=O)O-, -O(C=O)- or - O(C=O)O-, R₁ to R₁₀ are each independently hydrogen, a halogen, an alkyl group, an alkoxy group, an alkoxycarbonyl group, a cyano group, a nitro group or a substituent of Formula 3, in which n substituents form a radical connected with X of Formula 1, or m substituents form a radical connected with X of Formula 1, and p substituents form a radical connected with a substituent of Formula 3 (here, m and p are any numbers satisfying m+p=n).

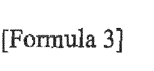

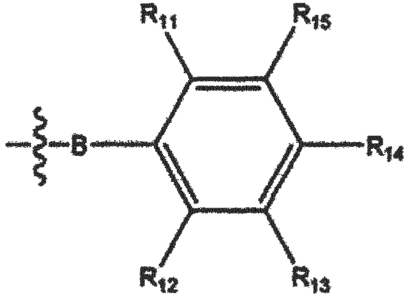

In Formula 3, B is a single bond, -O-, -C(=O)-, -C(=O)O-, -O(C=O)- or - O(C=O)O-, R₁₁ to R₁₅ are each independently hydrogen, a halogen, an alkyl group, an alkoxy group, an alkoxycarbonyl group, a cyano group or a nitro group, in which p substituents form a radical connected with X of Formula 1.

In the specification, as a halogen, chlorine, bromine or iodine may be used.

In the specification, the alkyl group may be, unless particularly defined otherwise, a linear or branched alkyl group having 1 to 20, 1 to 16, 1 to 12, 1 to 8 or 1 to 4 carbon atoms, or a cycloalkyl group having 3 to 20, 3 to 16, 3 to 12, 3 to 8 or 3 to 6 carbon atoms. The alkyl group may be optionally substituted by at least one substituent.

In the specification, as an alkoxy group, unless particularly defined otherwise, an alkoxy group having 1 to 20, 1 to 16, 1 to 12, 1 to 8 or 1 to 4 carbon atoms maybe used. The alkoxy group may be a linear, branched or cyclic type. In addition, the alkoxy group maybe optionally substituted by at least one substituent.

In addition, the mark 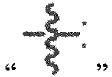 used herein may indicate that the part indicated by the mark is connected to a mother compound. For example, the 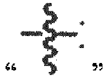 at the left side of B in Formula 2 may indicate that B is directly connected to a benzene of Formula 1.

The term "single bond" used herein may indicate that a separate atom or atomic group is not present. For example, in Formulas 1 to 3, the term "single bond" indicates that a separate atom is not present at the part represented by A or B. For example, when W of Formula 2 is a single bond, benzenes at both sides of W are directly connected, thereby forming a biphenyl structure. In the mesogen core included in the liquid crystal composition of the present application, in the definition of Formula 2, for example, W may be -C(=O)O- or -O(C=O)-, and R₁ to R₁₀ may each independently be hydrogen, a halogen, an alkyl group, a cyano group or a substituent of Formula 3, in which R₃ and R₈ of R₁ to R₁₀ are connected with X, or with the substituent of Formula 3.

In addition, in the definition of Formula 3, for example, B may be -C(=O)O- or -O(C=O)-, R₁₁ to R₁₅, except n of R₁₁ to R₁₅, or may each independently be hydrogen, a halogen, an alkyl group or a cyano group, and R₁₄ of R₁₁ to R₁₅ may be in a location at which it forms a radical connected with X of Formula 1.

In addition, in the definition of Formula 2 or 3, m may be a number 1 to 4, and p may be a number 1 or 2.

In the liquid crystal composition of the present application, a mixing ratio of the first and second reactive liquid crystal compounds may be selected in a suitable range without particular limitation in consideration of a desired effect, and for example, the second reactive liquid crystal compound may be included in the liquid crystal composition at 1 to 1,000, 10 to 500, 25 to 250 or 50 to 150 parts by weight with respect to 100 parts by weight of the first reactive liquid crystal compound. In the specification, unless particularly defined otherwise, the unit "parts by weight" may mean a weight ratio between components.

The liquid crystal composition of the present application may include an additional reactive liquid crystal compound, for example, a third or fourth reactive liquid crystal compound, in addition to the above-described first and second reactive liquid crystal compounds in consideration of a desired effect, and the additional reactive liquid crystal compound may have the same backbone of the mesogen core as the above-described first and second reactive liquid crystal compounds. The liquid crystal composition of the present application may include at least two liquid crystal compounds having the same backbone of the mesogen core, thereby having a suitable solubility even in a solvent in which solubility is normally low, as will be described below, and may form a liquid crystal layer even on a base layer having erosivity to a raw material.

The liquid crystal composition of the present application may also include a polymerization initiator, but the present application is not particularly limited thereto. The polymerization initiator may be, for example, a photoinitiator.

The photoinitiator may initiate, for example, polymerization of a reactive liquid crystal compound by irradiation with light. The term "irradiation with light" used herein may mean, for example, irradiation with electromagnetic waves such as microwaves, infrared (IR) rays, ultraviolet (UV) rays, X rays and γ rays, or particle beams such as α-particle beams, proton beams, neutron beams and electron beams.

A type of the photoinitiator is not particularly limited, and a suitable type of the photoinitiator may be selected and used according to a purpose. The photoinitiator may be benzil (also referred to as bibenzoyl), benzoinisobutylether, benzoinisopropylether, benzophenone, benzoylbenzoic acid, methylbenzoyl benzoic acid, 4-benzoyl-4'-methyldiphenylsulfide, benzylmethylketal, dimethylaminomethylbenzoate, 2-n-butoxyethyl-4-dimethylaminobenzoate, p-methylaminobenzoic acid isoamyl, 3-3'-dimethyl-4-methoxybenzophenone, methyl benzoylformate, 2-methyl-1-(4-(methylthio)phenyl)-2-morpholinopropan-1-one, 2-benzyl-2-dimethylamino-1-(4-morpholinophenyl)-butan-1-one, 1-(4-dodecylphenyl)-2-hydroxy-2-methylpropan-1-one, 1-hydroxycyclohexylphenylketone, 2-hydroxy-2-methyl-1-phenylpropan-1-ane, 1-(4-isopropylphenyl)-2-hydroxy-2-methylpropan-1-one, 2-chlorothioxanthone, 2,4-diethylthioxanthone or 1-chloro-4-propoxythioxanthone, and when needed, the photoinitiator may be used in combination with a suitable activator.

A specific ratio of the photoinitiator is not particularly limited, and a suitable ratio may be selected according to a purpose. For example, the photoinitiator may be included at 1 to 10 parts by weight with respect to 100 parts by weight of the liquid crystal compound, but the present application is not limited thereto. When the ratio of the photoinitiator is excessively low, appropriate polymerization may not be induced. In contrast, when the ratio of the photoinitiator is excessively high, after a liquid crystal layer is formed, a physical property may be degraded due to a remaining initiator, and accordingly, a suitable ratio may be selected.

The liquid crystal composition may further include a surfactant. Here, as the surfactant, for example, a fluorocarbon- or silicon-based surfactant may be used. As the fluorocarbon-based surfactant, Fluorad FC4430, Fluorad FC4432, or Fluorad FC4434 manufactured by 3M in the United States or Zonyl manufactured by Dupont in the United States may be used, and as the silicon-based surfactant, BYK manufactured by BYK-Chemie may be used, but the present application is not limited thereto.

A ratio of the surfactant is not particularly limited, and, for example, the surfactant may be included at 0.05 to 5 parts by weight with respect to 100 parts by weight of a horizontal alignment liquid crystal compound. When the ratio of the surfactant is excessively low, a surface state of the liquid crystal layer may be poor, and when the ratio of the surfactant is excessively high, staining may occur due to the surfactant, and a suitable ratio may be selected in consideration of this.

The liquid crystal composition of the present application may further include a solvent.

As the solvent, for example, a solvent in which a reactive liquid crystal compound of Formula 4 has a solubility of 10 or less at room temperature may be used, but the present application is not particularly limited thereto.

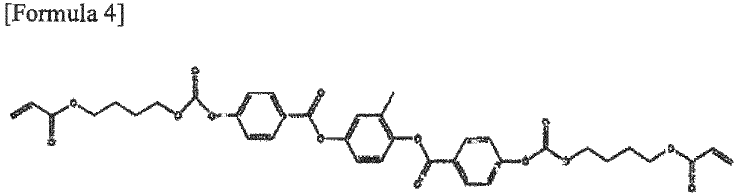

The term "solubility" used herein may be used with its conventional meaning, for example, may refer to a number of grams (g) of the maximum amount of a solute dissolved in 100 g of a solvent at a predetermined temperature, and may be represented in units of "g/(solvent) 100 g" or with no unit. In the specification, the unit will be omitted. In addition, in the specification, the solute may mean the above-described liquid crystal compound. In addition, in the specification, the term "room temperature" may be a temperature in a natural state without heating or cooling, for example, approximately 10 to 30 °C, 15 to 30 °C, or 25 °C.

As the solubility in the solvent is low, in the present application, various solvents may be selected, and thus the lower limit is not particularly limited. For example, the solubility of the reactive liquid crystal compound of Formula 4 in the solvent at room temperature may be 9, 8, 7, 6 or 5. In addition, the solubility the reactive liquid crystal compound of Formula 4 in the solvent may be changed according to a type of a specific solvent, but may be, for example, 10 or less, 15 or less, or 20 or less at room temperature.

The liquid crystal composition of the present application may have a suitable solubility even in a solvent in which solubility is normally lower, and may form a liquid crystal layer on a base layer having erosivity to a raw material.

The solvent may be mixed with at least one selected from the group consisting of, specifically, a ketone-based solvent such as methyl ethyl ketone or methyl isobutyl ketone; an ether-based solvent such as ethyleneglycol dimethyl ether, ethyleneglycol diethyl ether, propyleneglycol methyl ether, propyleneglycol dimethyl ether or propyleneglycol diethyl ether; a halogenated solvent such as chloroform, methylenechloride, 1,2-dichloroethane, 1,1,1-trichloroethane, 1,1,2-trichloroethane or 1,1,2-trichloroethene; an aromatic hydrocarbon-based solvent such as hexane, heptane, octane, cyclohexane, benzene, toluene or xylene; an alcohol-based solvent such as methanol, ethanol, isopropanol, propanol, butanol or t-butanol; an acetate-based solvent such as propyleneglycol methyl ether acetate, propyleneglycol ethyl ether acetate, 3-methoxybutyl acetate, ethyleneglycol acetate, ethyl cellosolveacetate, methyl cellosolveacetate, butyl acetate; or a cellosolve such as methylcellosolve, ethylcellosolve, or butylcellosolve. The solvent may be included in the type of a mixed solvent, and solvents included in the mixed solvent may be mixed in a suitable ratio in consideration of a desired effect, for example, a physical property such as coatability, without particular limitation.

The liquid crystal composition may further include a known additive, for example, a stabilizer or a non-polymerizable non-liquid crystal compound, when needed, in addition to the above components.

In another aspect, a liquid crystal film is provided.

An exemplary liquid crystal film may include a liquid crystal layer formed of the liquid crystal composition.

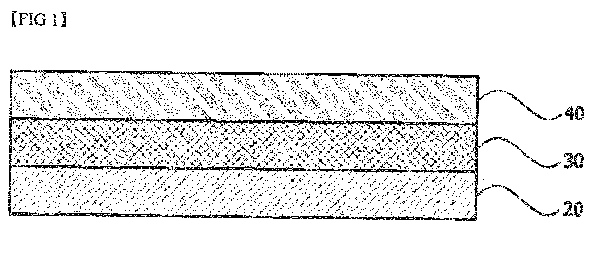

FIG. 1 shows an exemplary liquid crystal film according to the present application. As shown in FIG. 1, the liquid crystal film may include, for example, a base layer 20, an alignment film 30 present on the base layer 20, and a liquid crystal layer 40 present on the alignment film 30.

As the base layer included in the liquid crystal film, for example, as a plastic base layer, a cellulose base layer such as triacetyl cellulose (TAC) or diacetyl cellulose (DAC); a cyclo olefin polymer (COP) base layer such as a norbornene derivative; an acryl base layer such as poly(methyl methacrylate) (PMMA); a polycarbonate (PC) base layer; a polyolefin base layer such as polyethylene (PE) or polypropylene (PP); a polyvinyl alcohol (PVA) base layer; a poly ether sulfone (PES) base layer; a polyetheretherketone (PEEK) base layer; a polyetherimide (PEI) base layer; a polyethylenenaphthalate (PEN) base layer; a polyester base layer such as polyethyleneterephthalate (PET); a polyimide (PI) base layer; a polysulfone (PSF) base layer; or a fluorine polymer base layer such as an amorphous fluorine resin may be used. In one example, as a base layer of the liquid crystal film, a polycarbonate base layer may be used.

In the liquid crystal film, the alignment film present between the base layer and the liquid crystal layer may be a known alignment film without limitation on its type, for example, an optical alignment film, which may be formed by another known method such as rubbing polymerization.

In the liquid crystal film, the liquid crystal layer formed on the alignment film may be manufactured, for example, by coating, aligning and curing the above-described liquid crystal composition or a coating solution prepared using the same on the alignment film.

The liquid crystal layer may be formed, for example, by coating the liquid crystal composition on the alignment film, and aligning and polymerizing the liquid crystal compound. The liquid crystal composition may be manufactured, for example, by dissolving a polymerizable liquid crystal compound in a suitable solvent. Particularly, the liquid crystal composition may be manufactured by dissolving the polymerizable liquid crystal compound and a photoinitiator in a solvent. In the liquid crystal composition, in addition to the above components, in a range in which alignment of liquid crystal molecules is not disturbed, a chiral agent, a surfactant, a polymerizable monomer and a polymer may be further mixed.

In the preparation of the liquid crystal composition, for example, a solvent such as a halogenated hydrocarbon such as chloroform, tetrachloroethane, trichloroethylene, tetrachloroethylene, or chlorobenzene; an aromatic hydrocarbon such as benzene, toluene, xylene, mesitylene, cymene, methoxy benzene or 1,2-dimethoxybenzene; a ketone such as acetone, methylethylketone, cyclohexanone or cyclopentanone; an alcohol such as isopropyl alcohol or n-butanol; or a cellosolve such as methyl cellosolve, ethyl cellosolve or butyl cellosolve may be used.

The liquid crystal composition including the polymerizable liquid crystal compound may be coated on the alignment film, dried, aligned and polymerized. The drying may be performed for 1 minute or more at approximately 25 to 120 °C. The drying temperature may be a factor which can affect alignment of liquid crystals, induce suitable alignment of the liquid crystal molecule in the above range, and prevent staining.

After the drying, the coating layer is irradiated with light, for example, UV rays, to polymerize the liquid crystal compound. Such polymerization may be performed in the presence of a photoinitiator absorbing a wavelength in a UV region. In addition, a crosslinking reaction may be induced in the above-described alignment film by the irradiation of light.

The irradiation with UV rays may be performed in the air or in a nitrogen atmosphere blocking oxygen to increase reaction efficiency. The irradiation with UV rays may be generally performed using a medium pressure or high pressure mercury UV lamp with an intensity of 80 w/cm or a metal halide lamp as a UV irradiator. When needed, a cold mirror or another cooling device may be installed between a base layer and a UV lamp such that a surface temperature of the liquid crystal layer is in a temperature range in which it is in a liquid state during the irradiation with UV rays.

The liquid crystal film may be used, for example, as a retardation film for a display device or a viewing angle compensation film, or a protecting film of a polarizer.

In addition, as the method of manufacturing a required liquid crystal film, a known method may be employed instead of that described above, and the present application is not particularly limited thereto.

In still another aspect, a display device such as a liquid crystal display device is provided. An exemplary liquid crystal display device may include the liquid crystal film.

The liquid crystal film may be useful as an optical compensation base layer for a liquid crystal display device, and therefore the liquid crystal film may be included in the device as an optical compensation base layer. In addition, the film may be used, for example, as a retardation film for a super twisted nematic (STN) LCD, a thin film transistor-twisted nematic (TFT-TN) LCD, a vertical alignment (VA) LCD or an in-plane switching (IPS) LCD; a λ/2 wavelength plate; a λ/4 wavelength plate; a reverse wavelength dispersion film; an optical compensation film; a color filter; a film formed by stacking a polarizing plate and a polarizer; or a polarizing plate compensation film.

A liquid crystal display device including the liquid crystal film will be described below.

That is, the liquid crystal display device may include a liquid crystal panel and first and second polarizing plates disposed on both surfaces of the liquid crystal panel, and the liquid crystal film may be disposed between the liquid crystal panel and the first polarizing plate, and/or between the liquid crystal panel and the second polarizing plate.

Here, the first and/or second polarizing plate(s) may include a protective film on one or both surfaces thereof. The protective film may be a TAC film, a polynorbornene film manufactured through ring opening metathesis polymerization (ROMP), a ring-opening cycloolefin polymer (COP) manufactured by being rehydrogenated through ROMP followed by hydrogenation (HROMP), a polyester film, a polynorbornene-based film manufactured by addition polymerization, or a film manufactured of a transparent polymer material, but the present application is not limited thereto.

### [Advantageous Effects]

A liquid crystal composition according to the present application can form a liquid crystal layer not having staining caused by a thickness difference even with large-area coating, and can also form a liquid crystal layer on a base layer having erosivity to a raw material since it has suitable solubility even in a solvent in which solubility is normally low.

### [Description of Drawings]

FIG. 1 is a schematic diagram showing a structure of a liquid crystal film according to an example of the present application.

### [Mode for Application]

Hereinafter, the present invention will be described in further detail with reference to examples according to the present application and comparative examples not according to the present application, but the scope of the present application is not limited to the following examples.

Physical properties in Examples and Comparative Examples were evaluated by the following methods.

### 1. Measurement of solubility

Liquid crystal compositions prepared in Example and Comparative Example were stored in a freezer at -8 °C for 24 hours, and whether the input liquid crystal compositions were or were not educed was observed with the naked eye and evaluated according to the following criteria.

### <Evaluation Criteria>

○: Eduction of the liquid crystal composition was not observed.
Δ: Partial eduction of the liquid crystal composition was observed.
×: No eduction of the liquid crystal composition was observed.

### 2. Measurement of number of bright spots

To measure the number of bright spots from a liquid crystal film manufactured in Example 1, Example 4, Comparative Example 1 or Comparative Example 5, the liquid crystal film was disposed between two polarizing plates in which an absorption axis of the polarizing plate formed an angle of 90 degrees on a backlight and an optical axis of the liquid crystal film corresponded to one absorption axis of the two polarizing plates to detect the number of bright spots within 1 m² with the naked eye.

### 3. Degree of staining caused by phase difference

To detect a degree of staining caused by phase difference from a liquid crystal film manufactured in Example 1, Example 4, Comparative Example 1 or Comparative Example 5, the liquid crystal film was disposed between two polarizing plates in which an absorption axis of the polarizing plate formed an angle of 90 degrees on a backlight, and an optical axis of the liquid crystal film was disposed to form an angle of 45 degrees with the absorption axes of the two polarizing plates. In this case, a penetration amount of a backlight was changed according to the phase difference of the liquid crystal film, and thus the difference according to the phase difference of the liquid crystal film was shown in a difference in penetrating light (spots caused by phase difference). When the thickness of the liquid crystal film was 2 µm, the degree of spots caused by the phase difference shown on each liquid crystal film was observed with the naked eye and evaluated according to the following criteria.

### <Evaluation Criteria>

○: Staining was hardly observed on the liquid crystal film.
×: Staining was easily observed on the liquid crystal film with the naked eye.

### Example 1

### Preparation of liquid crystal composition

A liquid crystal compound of Formula A, 2-methyl-1,4-phenylene bis(4-(((4-(acryloyloxy)butoxy)carbonyl)oxy)benzoate (LC242 manufactured by BASF), was mixed with a liquid crystal compound of Formula B, 2-methyl-1,4-phenylene bis(4-(3-(acryloyloxy)propoxy)benzoate (RM 257 manufactured by MERCK), in a weight ratio of 1:1. In addition, the mixture was added into a solvent (A) prepared by mixing propyleneglycol methyl ether acetate and 2-butoxyethanol in a ratio of 4:2:4, and Irgacure 907 (BASF) was added as an initiator at 2 parts by weight with respect to 100 parts by weight of a solid content, thereby preparing a solution-type liquid crystal composition (A1).

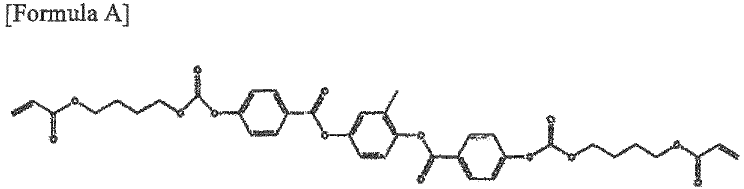

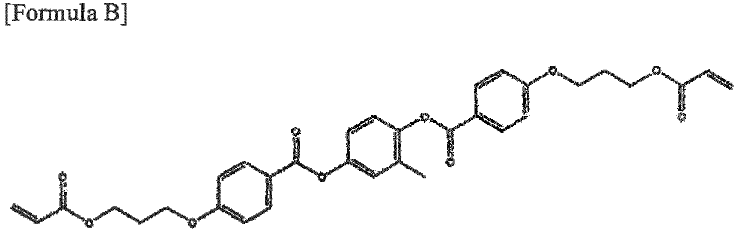

### Manufacture of liquid crystal film

An alignment film was formed on one surface of a TAC base layer by a known method, and the liquid crystal composition was coated to have a thickness after drying of approximately 1 µm and heated in an oven at 60 °C for 2 minutes to remove a solvent in the coating film. Subsequently, UV rays (light source: a high pressure mercury light with an intensity of 300 mJ/cm²) for curing were radiated, thereby manufacturing a liquid crystal film.

### Example 2

A liquid crystal composition and a liquid crystal film were manufactured by the same method as described in Example 1, except that a solvent (B) prepared by mixing methylethylketone, propyleneglycol methyl ether acetate and 2-butoxyethanol in a weight ratio of 4:2:4 was added to a concentration of 25 wt%, instead of the solvent (A) used in Example 1.

### Example 3

A liquid crystal composition and a liquid crystal film were manufactured by the same method as described in Example 1, except that a solvent (C) prepared by mixing toluene, propyleneglycol methyl ether acetate and 2-butoxyethanol in a weight ratio of 4:2:4 was added to a concentration of 25 wt%, instead of the solvent (A) used in Example 1.

### Example 4

A liquid crystal composition and a liquid crystal film were manufactured by the same method as described in Example 1, except that the liquid crystal compound of Formula A, the liquid crystal compound of Formula B, and a liquid crystal compound of Formula C, 2-methyl-1,4-phenylene bis(4-(3-(acryloyloxy)butoxy)benzoate (TRM24), were mixed in a weight ratio of 1:1:1 as liquid crystal compounds.

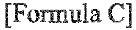

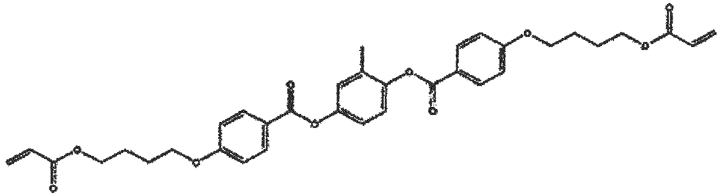

### Example 5

A liquid crystal composition and a liquid crystal film were manufactured by the same method as described in Example 4, except that a solvent (B) prepared by mixing methylethylketone, propyleneglycol methyl ether acetate and 2-butoxyethanol in a weight ratio of 4:2:4 was added to a concentration of 25 wt%, instead of the solvent (A) used in Example 4.

### Example 6

A liquid crystal composition and a liquid crystal film were manufactured by the same method as described in Example 4, except that a solvent (C) prepared by mixing toluene, propyleneglycol methyl ether acetate and 2-butoxyethanol in a weight ratio of 4:2:4 was added to a concentration of 25 wt%, instead of the solvent (A) used in Example 4.

### Example 7

A liquid crystal composition and a liquid crystal film were manufactured by the same method as described in Example 4, except that a solvent (D) prepared by mixing propyleneglycol methyl ether acetate and 2-butoxyethanol in a weight ratio of 6:4 was added to a concentration of 25 wt%, instead of the solvent (A) used in Example 4.

### Comparative Example 1

A liquid crystal composition and a liquid crystal film were manufactured by the same method as described in Example 1, except that only the liquid crystal compound of Formula A, 2-methyl-1,4-phenylene bis(4-(((4-(acryloyloxy)butoxy)carbonyl)oxy)benzoate (LC242 manufactured by BASF) was used at 100% as a liquid crystal compound.

### Comparative Example 2

A liquid crystal composition and a liquid crystal film were manufactured by the same method as described in Comparative Example 1, except that a solvent (B) prepared by mixing methylethylketone, propyleneglycol methyl ether acetate and 2-butoxyethanol in a weight ratio of 4:2:4 was added to a concentration of 25 wt%, instead of the solvent (A) used in Comparative Example 1.

### Comparative Example 3

A liquid crystal composition and a liquid crystal film were manufactured by the same method as described in Comparative Example 1, except that a solvent (C) prepared by mixing toluene, propyleneglycol methyl ether acetate and 2-butoxyethanol in a weight ratio of 4:2:4 was added to a concentration of 25 wt%, instead of the solvent (A) used in Comparative Example 1.

### Comparative Example 4

A liquid crystal composition and a liquid crystal film were manufactured by the same method as described in Comparative Example 1, except that a solvent (D) prepared by mixing propyleneglycol methyl ether acetate and 2-butoxyethanol in a weight ratio of 6:4 was added to a concentration of 25 wt%, instead of the solvent (A) used in Comparative Example 1.

### Comparative Example 5

A liquid crystal composition and a liquid crystal film were manufactured by the same method as described in Example 1, except that the liquid crystal compound of Formula A, 2-methyl-1,4-phenylene bis(4-(((4-(acryloyloxy)butoxy)carbonyl)oxy)benzoate (LC242 manufactured by BASF), the liquid crystal compound of Formula B, 2-methyl-1,4-phenylene bis(4-(3-(acryloyloxy)propoxy)benzoate (RM 257 manufactured by MERCK), and a liquid crystal compound of Formula D, 4-cyanophenyl 4-(4-(acryloyloxy)butoxy)benzoate (RM23), were mixed in a weight ratio of 1:1:1 as liquid crystal compounds.

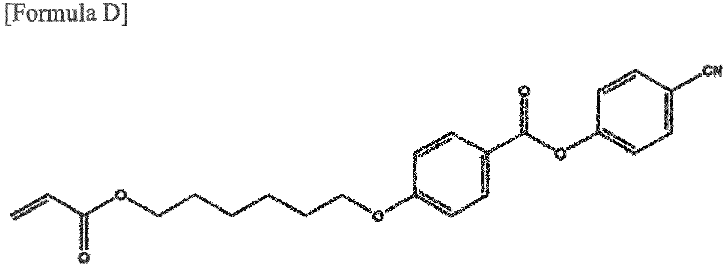

### Comparative Example 6

A liquid crystal composition and a liquid crystal film were manufactured by the same method as described in Comparative Example 5, except that a solvent (B) prepared by mixing methylethylketone, propyleneglycol methyl ether acetate and 2-butoxyethanol in a weight ratio of 4:2:4 was added to a concentration of 25 wt%, instead of the solvent (A) used in Comparative Example 5.

### Comparative Example 7

A liquid crystal composition and a liquid crystal film were manufactured by the same method as described in Comparative Example 5, except that a solvent (C) prepared by mixing toluene, propyleneglycol methyl ether acetate and 2-butoxyethanol in a weight ratio of 4:2:4 was added to a concentration of 25 wt%, instead of the solvent (A) used in Comparative Example 5.

### Comparative Example 8

A liquid crystal composition and a liquid crystal film were manufactured by the same method as described in Comparative Example 1, except that a solvent (D) prepared by mixing propyleneglycol methyl ether acetate and 2-butoxyethanol in a weight ratio of 6:4 was added to a concentration of 25 wt%, instead of the solvent (A) used in Comparative Example 5.

Physical properties and evaluation results measured from Examples and Comparative Examples are shown in Tables 1 and 2.

**[Table 1]**

| Category | Examples | | | | | | | Comparative Examples | | | | | | | |
|---|---|---|---|---|---|---|---|---|---|---|---|---|---|---|---|
| | 1 | 2 | 3 | 4 | 5 | 6 | 7 | 1 | 2 | 3 | 4 | 5 | 6 | 7 | 8 |
| Solubility | ○ | Δ | Δ | ○ | ○ | ○ | ○ | × | × | × | × | × | × | × | × |

**[Table 2]**

| Category | Examples | | Comparative Examples | |
|---|---|---|---|---|
| | 1 | 4 | 1 | 5 |
| Bright spots (unit: number) | 0.5 | 0.3 | 2 | 4 |
| Degree of staining caused by phase difference | ○ | ○ | × | × |

As seen from Tables 1 and 2, it was confirmed that the liquid crystal compound according to the present application had suitable solubility even in a solvent in which solubility is normally low, and thus formed a liquid crystal layer on a base layer having erosivity to a raw material, and also formed a liquid crystal layer in which staining due to a thickness difference does not occur even when the liquid crystal layer was formed in large-area coating.

### [Description of Symbols]

| | |
|---|---|
| 20: | base layer |
| 30: | alignment film |
| 40: | liquid crystal layer |

## Claims

1. A liquid crystal composition, comprising:
a first reactive liquid crystal compound and a second reactive liquid crystal compound represented by Formula 1, which have the same backbones of mesogen cores (M_{c}); and
a reactive liquid crystal compound having a different backbone of a mesogen core from the first and second reactive liquid crystal compounds: 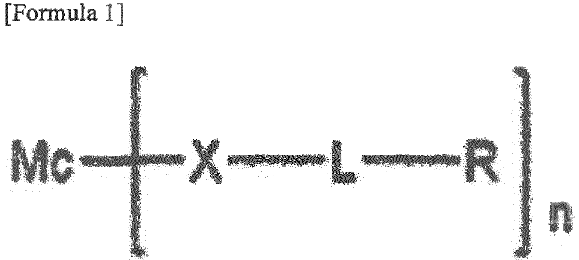
where M_{c} is a mesogen core, X is a single bond, -O-, -C(=O)-, -C(=O)O-,-O(C=O)- or -O(C=O)O-, L is an alkylene group, R is an alkenyl group, an epoxy group, a carboxyl group, a cyano group, an acryloyl group, a methacryloyl group, an acryloyloxy group or a methacryloyloxy group, and n is a number 2 or higher, and
X of the first reactive liquid crystal compound is different from X of the second reactive liquid crystal compound, or carbon atoms in an alkylene group of L of the first reactive liquid crystal compound are different from those of an alkylene group of L of the second reactive liquid crystal compound.

2. The composition of claim 1, wherein the mesogen core includes at least two benzene ring structures connected with a single bond, -O-, -C(=O)-, -C(=O)O-,-O(C=O)- or -O(C=O)O-.

3. The composition of claim 2, wherein the mesogen core includes at least three benzene ring structures.

4. The composition of claim 1, wherein the mesogen core is represented by Formula 2: 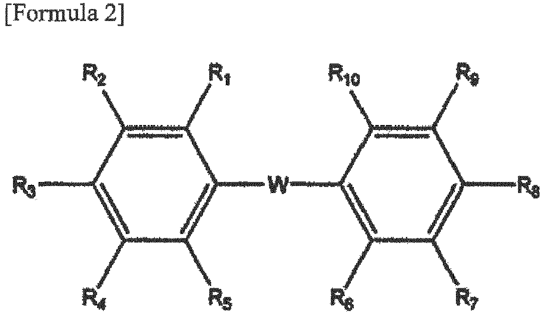 where W is a single bond, -O-, -C(=O)-, -C(=O)O-, -O(C=O)- or -O(C=O)O-, R₁ to R₁₀ are each independently hydrogen, a halogen, an alkyl group, an alkoxy group, an alkoxycarbonyl group, a cyano group, a nitro group or a substituent of Formula 3, in which n substituents form a radical connected with X of Formula 1, or m substituents form a radical connected with X of Formula 1, and p substituents form a radical connected with a substituent of Formula 3 below (here, m and p are any numbers satisfying m+p=n), and 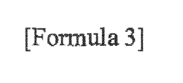 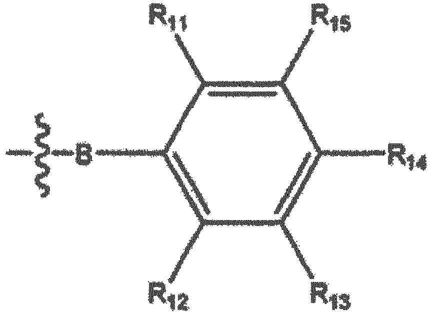 where B is a single bond, -O-, -C(=O)-, -C(=O)O-, -O(C=O)- or -O(C=O)O-, R₁₁ to R₁₅ are each independently hydrogen, a halogen, an alkyl group, an alkoxy group, an alkoxycarbonyl group, a cyano group or a nitro group, in which p substituents form a radical connected with X of Formula 1.

5. The composition of claim 1, wherein, in Formula 1, n is a number of 2 to 5.

6. The composition of claim 4, wherein, in the definition of Formula 2, m is a number of 1 to 4, and p is 1 or 2.

7. The composition of claim 1, wherein the second reactive liquid crystal compound is included at 1 to 1,000 parts by weight with respect to 100 parts by weight of the first reactive liquid crystal compound.

8. The composition of claim 1, further comprising a polymerization initiator.

9. The composition of claim 1, further comprising:
a solvent having a solubility of 10 or less at room temperature with respect to a reactive liquid crystal compound of Formula 4:

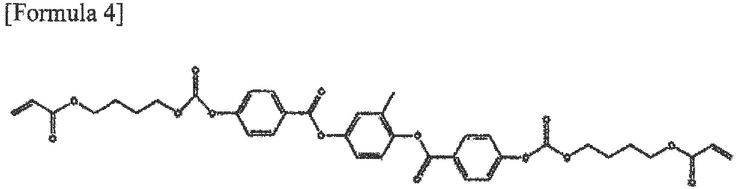

10. A liquid crystal film comprising a liquid crystal layer formed of the liquid crystal composition of Formula 1.

11. The film of claim 10, further comprising a base layer,
wherein the liquid crystal layer is formed on one surface of the base layer.

12. The film of claim 11, wherein the base layer is a cellulose base; a cyclic olefin polymer base; an acryl base; a polycarbonate base; a polyolefin base; a polyvinylalcohol base; a polyethersulfone base; a polyetheretherketone base; a polyetherimide base; a polyethylene naphthalate base; a polyester base; a polyimide base; a polysulfone base; or a fluorine polymer base.

13. The film of claim 11, further comprising an alignment film present between the base layer and the liquid crystal layer.

14. A display device comprising the liquid crystal film of claim 12.
